# EUROPÄISCHE PATENTANMELDUNG

(11) **EP 0 991 289 A2**
(43) Veröffentlichungstag der Anmeldung: **05.04.2000**
(21) Anmeldenummer: 99116067.2
(22) Anmeldetag: 16.08.1999
(51) Int. Cl.: H04Q 7/30

(54) **Basisstation für ein Funk-Kommunikationssystem**

(30) Priorität: 24.08.1998 DE 19838424
(71) Anmelder: SIEMENS AKTIENGESELLSCHAFT, 80333 München (DE)
(72) Erfinder: Merz, Peter, 81373 München (DE)

(57) **Zusammenfassung**

Erfindungsgemäß enthält eine Basisstation für ein Funk-Kommunikationssystem getrennte trägerbezogene Hochfrequenzeinheiten zur Verarbeitung von hochfrequenten Sende- und Empfangssignalen und Signalverarbeitungseinheiten zur Basisbandverarbeitung von Sende- und Empfangssignalen, wobei die Hochfrequenzeinheiten und die Signalverarbeitungseinheiten über eine Verteil/Kombiniereinheit mittels zumindest einer individuellen Leitung gemäß einer Punkt-zu-Punkt-Verbindung zur Übertragung von Verkehrsdaten verbunden sind. Durch die Trennung von trägerbezogener Hochfrequenzeinheit und Signalverarbeitungseinheit ist die Verarbeitungskapazität im Basisband in einem größeren Pool zusammengefaßt. Dies bedeutet, daß im Sinne der Verarbeitung der Signale für eine größere Teilnehmerzahl, die zusätzlichen Ressourcen nur einmal für die gesamte Basisstation und nicht für jede einzelne Hochfrequenzeiheit vorgehalten werden müssen. Damit wird der zusätzlich erforderliche Hard- und Softwareaufwand geringer. Die Verbindung von trägerbezogener Hochfrequenzeinheit und Signalverarbeitungseinheit mit einer sternförmigen Punkt-zu-Punkt-Verbindung zur Übertragung von Verkehrsdaten vermeidet extrem hohe Bitraten auf einer Busstruktur und den dafür ebenfalls nötigen Synchronisationsaufwand. Der Zugriff wird vereinfacht und ein aufwendiges Busprotokoll entfällt.

## Beschreibung

Die Erfindung betrifft eine Basisstation für ein Funk-Kommunikationssystem, insbesondere für Mobilfunknetze mit CDMA-Teilnehmerseparierung.

In Funk-Kommunikationssystemen werden Nachrichten (beispielsweise Sprache, Bildinformation oder andere Daten) mit Hilfe von elektromagnetischen Wellen über eine Funkschnittstelle übertragen. Die Funkschnittstelle bezieht sich auf eine Verbindung zwischen einer Basisstation und Mobilstationen, wobei anstelle der Mobilstationen auch ortsfeste Funkstationen versorgt werden können. Das Abstrahlen der elektromagnetischen Wellen erfolgt dabei mit Trägerfrequenzen, die in dem für das jeweilige System vorgesehenen Frequenzband liegen. Für zukünftige Funk-Kommunikationssysteme, beispielsweise das UMTS (Universal Mobile Telecommunication System) oder andere Systeme der 3. Generation sind Frequenzen im Frequenzband von ca. 2000 MHz vorgesehen.

Aus EP 0560 388 A1 ist eine Basisstation bekannt, die für ein TDMA (time division multiple access) Übertragungsverfahren eine Mehrzahl von Sende/Empfangseinrichtungen enthält, die über ein gemeinsames Bussystem mit zentralen Einrichtungen, z.B. Schnittstelleneinrichtungen verbunden sind. Verkehrsdaten und Steuerinformationen werden dabei parallel übertragen. Aus DE 197 55 379 ist eine Basisstation für ein TDMA-Übertragungsverfahren bekannt, die Punkt-zu-Punkt-Verbindungen zwischen einer Zentraleinheit und trägerbezogenen Sende/Empfangseinrichtungen benutzt. Dabei sind die sowohl die hochfrequenten als auch die Basisbandkomponenten der Sende/Empfangseinrichtungen trägerorientiert, d.h. auf die Auswertung von Signalen jeweils einer Trägerfrequenz bezogen, und in einer Baugruppe untergebracht. Ein solche Basisstation ist für den Einsatz im GSM-Mobilfunknetz geeignet.

Für andere Mobilfunknetze mit CDMA (code division multiple access) Teilnehmerseparierung ist die Anzahl der Teilnehmer pro Frequenzträger nicht fest durch die Anzahl der Zeitschlitze (wie beim TDMA-Teilnehmerseparierungsverfahren) vorgegeben. Eine Beschränkung der Teilnehmerzahl ist durch die Interferenzen des Systems bedingt (soft blocking limit). Hieraus resultiert ein Systemverhalten, daß eine 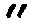 dehnbare" Kapazität durch Zulassung zusätzlicher Teilnehmer auf einer Trägerfrequenz zuläßt, wodurch allerdings die Übertragungsqualität der einzelnen Verbindungen sinkt. Die Sende/Empfangseinrichtungen der Basisstation müssen auch für diese zusätzlichen Teilnehmer ausreichend Verarbeitungskapazität bereithalten. Dadurch wird ein zusätzlicher Hard- und Softwareaufwand nötig.

Es ist Aufgabe der Erfindung eine Basisstation für ein solches CDMA-Teilnehmerseparierungsverfahren zu verbessern. Diese Aufgabe wird durch die Basisstation mit den Merkmalen des Anspruchs 1 gelöst. Vorteilhafte Weiterbildungen der Erfindung sind den Unteransprüchen zu entnehmen.

Erfindungsgemäß enthält eine Basisstation für ein Funk-Kommunikationssystem-
zumindest eine Antennenschnittstelleneinrichtung,
zumindest zwei trägerbezogene Hochfrequenzeinheiten zur Verarbeitung von hochfrequenten Sende- und Empfangssignalen,
zumindest eine Signalverarbeitungseinheit zur Basisbandverarbeitung von Sende- und Empfangssignalen,
zumindest eine Zentraleinheit zur Steuerung der Basisstation,
   wobei die trägerbezogenen Hochfrequenzeinheiten und die Signalverarbeitungseinheit über eine Verteil/Kombiniereinheit mittels zumindest einer individuellen Leitung gemäß einer Punkt-zu-Punkt-Verbindung zur Übertragung von Verkehrsdaten verbunden sind.

Durch die Trennung von trägerbezogener Hochfrequenzeinheit und Signalverarbeitungseinheit ist die Verarbeitungskapazität im Basisband in einem größeren Pool zusammengefaßt. Dies bedeutet, daß im Sinne der Verarbeitung der Signale für eine größere Teilnehmerzahl, die zusätzlichen Ressourcen nur einmal für die gesamte Basisstation und nicht für jede einzelne Hochfrequenzeinheit vorgehalten werden müssen. Damit wird der zusätzlich erforderliche Hard- und Softwareaufwand geringer. Die Verbindung von trägerbezogener Hochfrequenzeinheit und Signalverarbeitungseinheit mit einer sternförmigen Punkt-zu-Punkt-Verbindung zur Übertragung von Verkehrsdaten vermeidet extrem hohe Bitraten auf einer Busstruktur und den dafür ebenfalls nötigen Synchronisationsaufwand. Der Zugriff wird vereinfacht und ein aufwendiges Busprotokoll entfällt.

Bei mehreren trägerbezogenen Hochfrequenzeinheiten und Signalverarbeitungseinheiten kann so auch garantiert werden, daß in einer Signalverarbeitungseinheit ein Zugriff auf alle Antennensignale möglich ist, so daß ein Sende/Empfangsdiversitätsverfahren, ein Springen zwischen den für eine Verbindung ausgewählten Antennen (Antennahopping) oder auch der Einsatz intelligenter Antennen (Smart Antennas) unterstützt wird.

Ein getrenntes Hinzufügen weiterer trägerbezogener Hochfrequenzeinheiten und Signalverarbeitungseinheiten ermöglicht eine freie Skalierbarkeit der Verarbeitungsressourcen. Für extreme Kapazitätsanforderungen besteht die Möglichkeit, mehrere Signalverarbeitungseinheiten für die Verarbeitung von Teilnehmersignalen bzw. Diensten einer Trägerfrequenz zu nutzen. Ein Pool von Verarbeitungsressourcen in den Signalverarbeitungseinheiten kann nahezu beliebig einer oder mehreren Trägerfrequenzen zugeordnet werden.

Wird eine große Verarbeitungsleistung in einer Signalverarbeitungseinheit konzentriert, dann ist eine geringere Anzahl von individuellen Leitungen zwischen Hochfrequenzeinheiten und Signalverarbeitungseinheiten nötig und die Verkabelung ist einfacher. Auch sinkt der Synchronisationsaufwand und der Aufwand bei der Überwachung von defekten Baugruppen. Viele weniger leistungsstarke Hochfrequenzeinheiten schaffen hingegen eine Redundanz beim Ausfall einer einzelnen Baugruppe und ermöglichen eine kleinere Schrittweite bei der freien Skalierbarkeit der gesamten Verarbeitungsleistung der Basisstation. Die Signalverarbeitungseinheit ist in diesem Fall flexibel skalierbar für eine Verarbeitung von standort-, sektor-, träger-, teilnehmer- dienst- und/oder kanalspezifischen Informationen ausgebildet.

Nach einer vorteilhaften Weiterbildung der Erfindung weist die Zentraleinheit mehrere Schnittstelleneinrichtungen auf, die über kurze Leitungen untereinander verbunden sind und die jeweils mittels zumindest einer individuellen Leitung gemäß einer Punkt-zu-Punkt-Verbindung zur Übertragung von Verkehrsdaten mit Schnittstelleneinrichtungen in den Signalverarbeitungseinheiten verbunden sind. Dies bringt bezüglich des Informationsaustausches eine größere Flexibilität mit sich. Durch zusätzliche individuelle Leitungen zwischen der Zentraleinheit und den trägerbezogenen Hochfrequenzeinheiten für eine Übertragung von Taktinformation und/oder Steuerinformationen kann die Schnittstelle zwischen Hochfrequenzeinheit und Signalverarbeitungseinheit entlastet werden.

Vorteilhafterweise sind für die Schnittstelleneinrichtungen und die Verteil/Kombiniereinheit Speicher vorgesehen, so daß die Verkehrsdaten zwischengespeichert werden. Damit erfolgt durch die Schnittstelleneinrichtungen eine Pufferung zur Anpassung von Übertragungsprotokollen zwischen den Baugruppen bzw. innerhalb der Baugrupppen.

Nach einer weiteren vorteilhaften Weiterbildung der Erfindung sind die Schnittstelleneinrichtungen und die Verteil/Kombiniereinheit derart ausgebildet, daß die Verkehrsdaten seriell übertragen werden. Damit werden Leitungskosten eingespart und Gleichlängenprobleme innerhalb einer Verbindung zwischen Zentraleinheit und Sende/Empfangseinrichtung vermieden. Vorteilhafterweise wird die individuelle Leitung durch ein Leitungspaar (twisted pair) für jede Übertragungsrichtung gebildet.

Nach weiteren Ausgestaltungen der Erfindung ist die Verteil/Kombiniereinheit derart ausgebildet, daß auf eine Trägerfrequenz bezogene Informationen über die individuelle Verbindung übertragen werden, wobei die Informationen von Empfangs- und Sendedaten mit Inphase- und Quadraturkomponente im Basisband dargestellt sind. Zusätzlich zur Übertragung der Verkehrsdaten ist die Verteil/Kombiniereinheit vorteilhafterweise derart ausgebildet, daß eine Inbandsignalisierung mit Informationen zu einer Referenzleistung und/oder zur automatischen Verstärkungskontrolle in Empfangsrichtung über die individuelle Verbindung durchgeführt wird. Einige Steuerinformationen können so ohne Einbeziehung der Zentraleinheit direkt zwischen den Signalverarbeitungseinheiten und den Hochfrequenzeinheiten ausgetauscht werden.

Besondere Vorteile der Sternstruktur und Skalierbarkeit sind bei Basisstationen für Funk-Kommunikationssysteme mit CDMA-Teilnehmerseparierungsverfahren zu verzeichnen, so daß in diesem Fall die trägerbezogenen Hochfrequenzeinheit in Sende/Empfangsrichtung für eine Verarbeitung von breitbandigen mit einem CDMA-Teilnehmerseparierungsverfahren gespreizten Signalen ausgebildet ist.

Die Verteil/Kombiniereinheit kann zentral oder in Form mehrerer Baugruppen dezentral ausgebildet sein. Eine zentrale Verteil/Kombiniereinheit wirkt wie ein konfigurierbares Koppelnetzwerk. Die dezentrale Lösung bringt die Einsparung einer zusätzlichen Baugruppe mit sich und damit in einem Gestell einer Basisstation einen zusätzlichen freien Einschub. Auch werden Leitungen eingespart und beim Ausfall einer Hochfrequenzeinheit fällt nur diese eine Trägerfrequenz bzw. dieser ein Sektor aus.

Ausführungsbeispiele der Erfindung werden anhand der beiliegenden Zeichnungen näher erläutert.

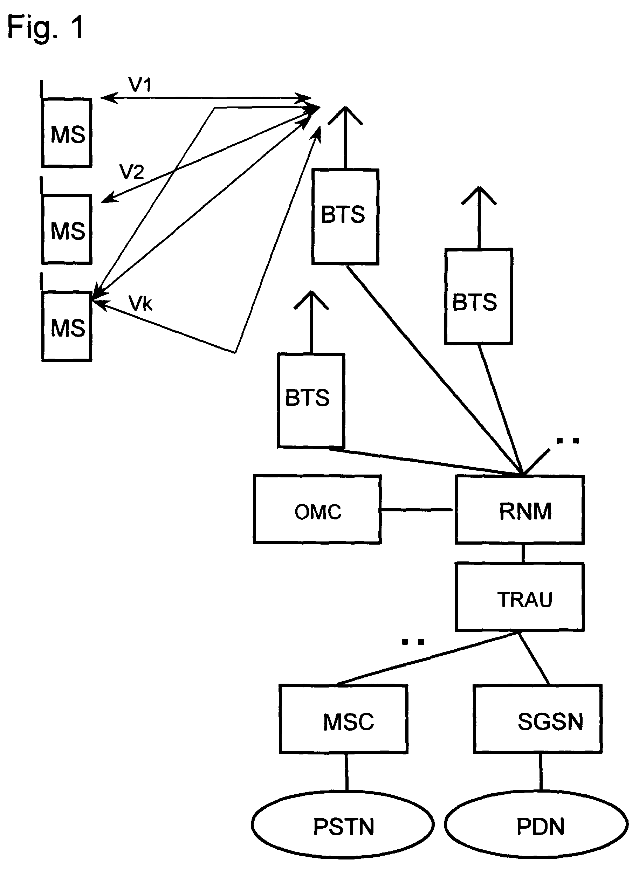

Dabei zeigen
- FIG 1: ein Blockschaltbild eines Mobilfunknetzes,
- FIG 2: ein Blockschaltbild von Verbindungen innerhalb der Basisstation,
- FIG 3: ein Blockschaltbild für eine Basisstation mit zentraler Verteil/Kombiniereinheit,
- FIG 4: ein Blockschaltbild einer zentralen Verteil/Kombiniereinheit, und
- FIG 5: ein Blockschaltbild für eine Basisstation mit dezentraler Verteil/Kombiniereinheit.

Im folgenden werden Ausführungsbeispiele für eine Basisstation BTS eines W-CDMA-Mobilfunknetzes gezeigt, ohne die Allgemeingültigkeit der Struktur der Basisstation BTS auch für andere Standards zu beschränken.

Wesentlicher Bestandteil des Mobilfunknetzes ist ein Basisstationssystem, das all jene Komponenten umfaßt, die notwendig sind, um eine funktechnische Versorgung innerhalb einer bestimmten geographischen Zone zu gewährleisten und somit Verbindungen zu Mobilstationen MS aufzubauen. Das Basisstationssystem umfaßt Basisstationen BTS, die mit einem Funkressourcenmanager RNM verbunden sind. Der Funkressourcenmanager RNM ist mit einer Transcodiereinheit TRAU verbunden, die wiederum mit einer Mobilvermittlungsstelle MSC verbunden ist. Weiterhin ist der Funkressourcenmanager RNM mit einer Paketvermittlungsstelle SGSN verbunden.

Die Mobilvermittlungsstelle MSC gewährleistet die netzseitige Verbindung zu einem Festnetz PSTN, währenddessen die Paketvermittlungsstelle SGSN die Verbindung zu einem Paketdatennetz PDN herstellen kann. Der Funkressourcenmanager RNM ist mit einem Wartungs- und Organisationszentrum OMC verbunden. Zwischen Mobilstation MS und Basisstation BTS kann eine Funkverbindung mit einem CDMA-Teilnehmerseparierungsverfahren in einem breitbandigen Kanal, z.B. mit 5 MHz Bandbreite, aufgebaut werden.

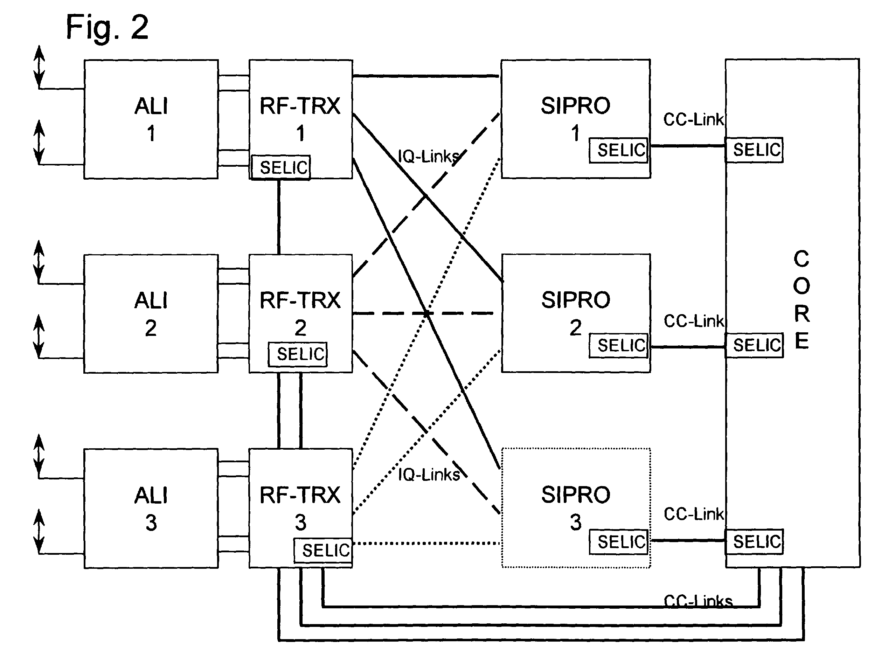

Im weiteren wird nunmehr die Struktur der Basisstation BTS betrachtet, wobei gemäß FIG 2 die Basisstation BTS eine aus DE 197 55 379 bekannte Zentraleinheit CORE und mehrere Signalverarbeitungseinheiten SIPRO (signal processing) enthält. Die Zentraleinheit CORE und die Signalverarbeitungseinheiten SIPRO sind über eine sternförmige Struktur von individuellen Leitungen CC-Link verbunden, so daß sich zwischen der Zentraleinheit CORE und jeder einzelnen Signalverarbeitungseinheiten SIPRO eine Punkt-zu-Punkt-Verbindung für zu übertragende Verkehrsdaten ergibt. Weiterhin umfaßt die Basisstation BTS trägerbezogene Hochfrequenzeinheiten RF-TRX (radio frequency transceiver) und jeweils Antennenschnittstelleneinheiten ALI (antenna link interface), die eine Verbindung zu Antennen herstellen. Die Zuordnung von Antennen zu Hochfrequenzeinheiten RF-TRX ist in FIG 2 sektorbezogen. Es liegt jedoch im Rahmen der Erfindung auch andere Zuordnungen zu realisieren.

Jede Hochfrequenzeinheit RF-TRX und Signalverarbeitungseinheit SIPRO enthält eine Schnittstelleneinrichtung SELIC. Auch die Zentraleinheit CORE enthält Schnittstelleneinrichtungen SELIC, deren Anzahl mindestens der Zahl von angeschlossenen Hochfrequenzeinheiten RF-TRX und Signalverarbeitungseinheiten SIPRO entspricht. Werden zwei parallel Zentraleinheiten eingesetzt, so liegt eine Redundanz vor, die es auch im Falle eines teilweisen Ausfalls gestattet, die ordnungsgemäße Funktion der Basisstation aufrechtzuerhalten. In der Regel ist eine der beiden Zentraleinheiten passiv.

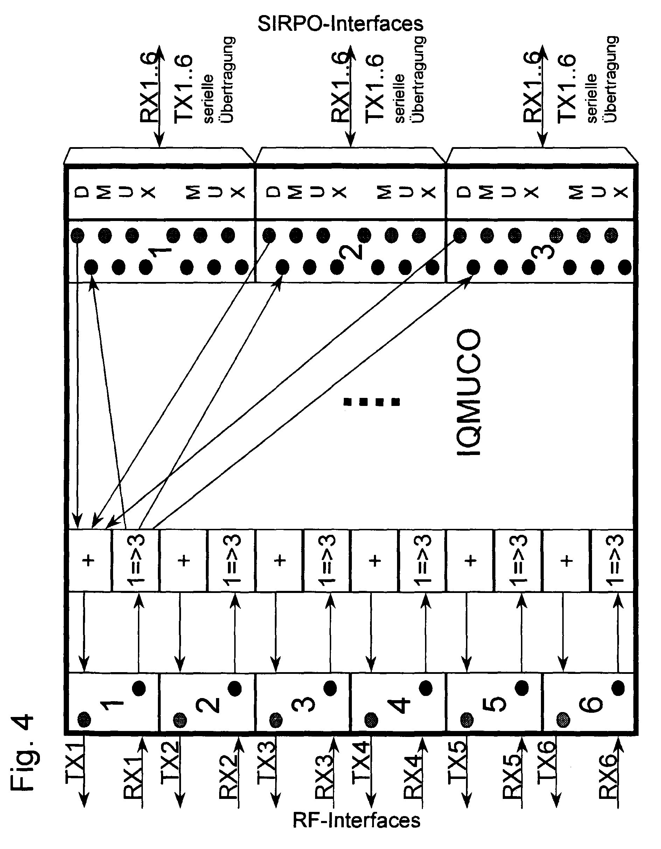

Über die individuellen Verbindungen CC-Link zwischen der Zentraleinheit CORE und den Hochfrequenzeinheiten RF-TRX bzw. den Signalverarbeitungseinheiten SIPRO werden Taktinformation und Steuerinformationen übertragen, währenddessen über die individuellen Leitungen IQ-Link zwischen den Hochfrequenzeinheiten RF-TRX und den Signalverarbeitungseinheiten SIPRO auf eine Trägerfrequenz bezogene Informationen von Empfangsdaten in Empfangsrichtung und Sendedaten in Senderichtung mit Inphase- und Quadraturkomponente im Basisband übertragen werden. Die Übertragung der Informationen mit Inphase- und Quadraturkomponente erfolgt seriell und im Multiplexverfahren (siehe Multiplexer/Demultiplexer in FIG 4) über Leitungspaare (twisted pair) für jede Übertragungsrichtung getrennt. Eine Inbandsignalisierung mit Informationen zu einer Referenzleistung und/oder zur automatischen Verstärkungskontrolle in Empfangsrichtung erfolgt zusätzlich über die individuellen Leitungen IQ-Link zwischen den Hochfrequenzeinheiten RF-TRX und den Signalverarbeitungseinheiten SIPRO. Die genannten Informationen werden in Speichern der einzelnen Baugruppen zur Anpassung der Übertragungsprotokolle zwischengespeichert.

Durch die sternförmige Struktur der Kommunikation zwischen den Hochfrequenzeinheiten RF-TRX und den Signalverarbeitungseinheiten SIPRO erhält in Empfangsrichtung jede Signalverarbeitungseinheit SIPRO die Empfangsdaten aller Hochfrequenzeinheiten RF-TRX und in Senderichtung erhält jede Hochfrequenzeinheit RF-TRX die aufbereiteren Sendedaten aller Signalverarbeitungseinheiten SIPRO. Eine aufwendige Kommunikation zwischen den Signalverarbeitungseinheiten SIPRO ist nicht nötig.

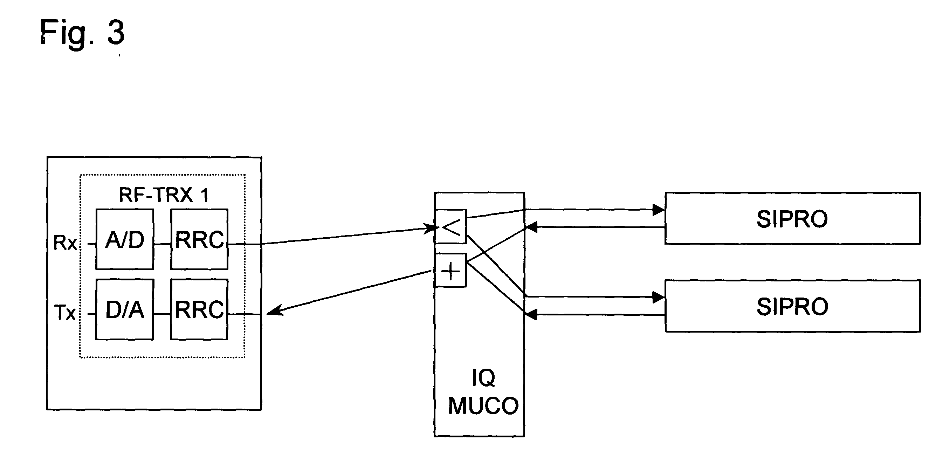

In FIG 3 ist eine Basisstation BTS mit einer zentralen Verteil/Kombiniereinheit IQMUCO gezeigt, die als Koppelnetzwerk eingesetzt ist. Die Verteil/Kombiniereinheit IQMUCO erhält von jeder Hochfrequenzeinheit RF-TRX und jeder Signalverarbeitungseinheit SIPRO entsprechend aufbereitete Sende- Tx und Empfangsdaten Rx für jede Trägerfrequenz. Die Empfangsdaten Rx werden beispielsweise auf zwei Signalverarbeitungseinheiten SIPRO verteilt (<) und andererseits werden Sendedaten Tx von zwei Signalverarbeitungseinheiten SIPRO kombiniert (+).

Durch die Verteilfunktion sind alle Antennen- bzw. Sektorsignale für die Signalauswertung im Basisband bei beliebigen Signalverarbeitungseinheiten SIPRO verfügbar, wodurch ein effektives Verteilen der Verarbeitungsleistung ermöglicht wird. Durch die Kombinierfunktion können Teilträgersignale in beliebigen Signalverarbeitungseinheiten SIPRO erzeugt werden, die erst in der Verteil/Kombiniereinheit IQMUCO zum trägerbezogenen Signal addiert werden. Durch diese flexible Verteilung und Kombination der Signale unterstützt die Basisstation die Funktionen der Sende/Empfangsdiversität, d.h. gleichzeitiges Senden/Empfangen eines Signal über mehrere Antennen, des sogenannten 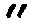 softer Handover", d.h. Übergabe einer Verbindung zwischen Antennen von Sektoren einer Basisstation, des Antennenspringens, d.h. zyklische Auswahl unterschiedlicher Antennen zum Senden oder Empfangen, und der intelligenten Antennen, d.h. einer Strahlformung durch an die örtlichen Gegebenheiten des Übertragungskanals zur Mobilstation MS angepaßtes Gewichten mehrerer Antennensignale zum Senden oder Empfangen, unterstützt.

Weiterhin ist in FIG 3 vereinfacht eine Hochfrequenzeinheit RF-TRX 1 gezeigt, die in Empfangsrichtung Rx einen Analog/Digital-Wandler A/D und in Senderichtung Tx einen korrespondierenden Digital/Analog-Wandler D/A enthält. In beiden Übertragungsrichtungen Tx und Rx findet eine Filterung in einem Root-Raised-Cosine-Filter RRC statt, der für eine breitbandige CDMA-Übertragung (W-CDMA) einerseits den Modulationsimpuls formt und eine Bandbegrenzung auf beispielsweise 5 MHz schafft. Vorteilhafterweise befindet sich das RCC Filter in der Hochfrequenzeinheit RF-TRX, um die Datenrate für die individuellen Leitungen IQ-Link so gering wie möglich zu halten.

Zwar sind in FIG 3 konkret zwei Signalverarbeitungseinheiten SIPRO dargestellt, doch kann leicht eine größere Anzahl von Signalverarbeitungseinheiten SIPRO vorgesehen sein, um eine feinstufige Skalierbarkeit der Verarbeitungsleistung und eine bessere Redundanz gegenüber Ausfällen zu erzielen. Die Verarbeitungsleistung einer Signalverarbeitungseinheit SIPRO ist im allgemeinsten Fall auf die gesamte Basisstation bezogen, so daß nur eine Signalverarbeitungseinheit SIPRO benötigt wird. Die Verarbeitungsleistung einer Signalverarbeitungseinheit SIPRO kann auch sektor- oder trägerfrequenzbezogen sein.

Im Ausführungsbeispiel ist die Verarbeitungsleistung jeweils auf einen Sektor und eine Trägerfrequenz bezogen. Eine feinstufigere Skalierung entsteht, wenn eine Signalverarbeitungseinheit SIPRO auf einen Teilnehmer, d.h. die Verarbeitung von dessen in der Datenrate durchaus schwankenden Signalfluß, auf einen Dienst mit fester oder variabler Datenrate oder einen Kanal mit einer minimalen feststehenden Basisdatenrate, deren Vielfaches die Datenrate für einen Dienst oder einen Teilnehmer bildet, orientiert ist. Hiermit entsteht besonders für modular aufrüstbare Basisstationen im Indoorbereich eine kosten- und aufwandsgünstige Ausführungsform.

Die Verteil/Kombiniereinheit IQMUCO nach FIG 4 zeigt detaillierter eine zentrale Baugruppe zum Anschluß von sechs Hochfrequenzeinheiten RF-TRX über dementsprechende Schnittstellen RF-Interfaces und drei Signalverarbeitungseinheiten SIPRO über weitere Schnittstellen SIPRO-Interfaces, welche über eine entsprechende Verkabelung realisiert werden. Somit wird in der Verteil/Kombiniereinheit IQMUCO sechsmal eine Verteilfunktion eins auf drei (1=>3) und sechsmal eine Kombinierfunktion von drei Datenströmen (+) für jede Hochfrequenzeinheit RF-TRX umgesetzt. Im Ausführungsbeispiel nach FIG 4 entsteht eine Basisstation mit 2 x 6 Trägerports, also maximal sechs Hochfrequenzeinheiten RF-TRX und damit sechs Trägerfrequenzen und 3 x 6 x 2 SIPRO-Ports, die für maximal drei Signalverarbeitungseinheiten SIPRO mit sechs Ports oder sechs Signalverarbeitungseinheiten SIPRO mit drei Ports genutzt werden können.

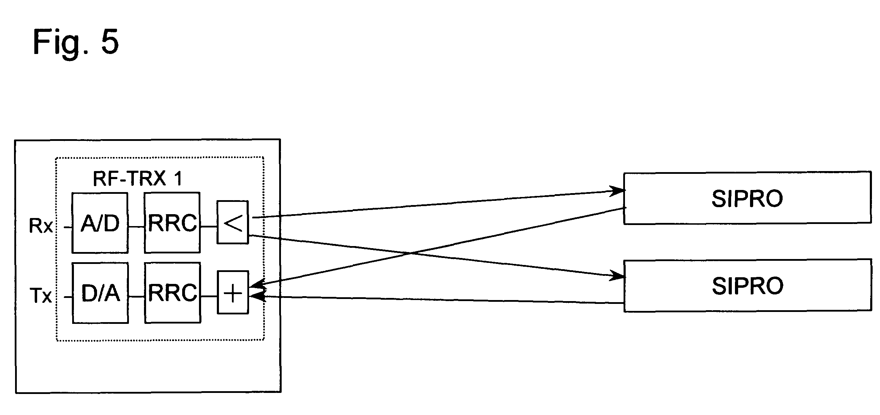

Die zentrale Struktur der Verteil/Kombiniereinheit IQMUCO läßt sich auch in eine dezentrale Struktur nach FIG 5 überführen. Pro Hochfrequenzeinheit RF-TRX ist eine Verteil/ Kombiniereinheit realisiert, die die Empfangsdaten auf mehrere Signalverarbeitungseinheiten SIPRO verteilt (<) und die Sendedaten mehrerer Signalverarbeitungseinheiten SIPRO addiert (+). Dadurch wird der Verkabelungsaufwand weiter verringert und die Synchronisation im Fall der Addition in Senderichtung beschränkt sich auf jeweils eine Hochfrequenzeinheit RF-TRX und die Signalverarbeitungseinheiten SIPRO. Beim Ausfall einer dezentralen Verteil/Kombiniereinheit IQMUCO ist nur ein Träger betroffen.

## Patentansprüche

1. Basisstation (BTS) für ein Funk-Kommunikationssystem,
- mit zumindest einer Antennenschnittstelleneinrichtung (ALI),
- mit zumindest zwei trägerbezogenen Hochfrequenzeinheiten (RF-TRX),
- mit zumindest einer Signalverarbeitungseinheit (SIPRO),
- mit zumindest einer Zentraleinheit (CORE) zur Steuerung der Basisstation (BTS),
**dadurch gekennzeichnet,**
- daß die trägerbezogenen Hochfrequenzeinheiten (RF-TRX) und die zumindest eine Signalverarbeitungseinheit (SIPRO) über eine Verteil/ Kombiniereinheit (IQMUCO) mittels jeweils zumindest einer individuellen Leitung (IQ-Link) gemäß einer Punkt-zu-Punkt-Verbindung zur Übertragung von Verkehrsdaten verbunden sind.

2. Basisstation (BTS) nach Anspruch 1,
**dadurch gekennzeichnet,**
daß die Zentraleinheit (CORE) mehrere Schnittstelleneinrichtungen (SELIC) aufweist, die über kurze Leitungen untereinander verbunden sind und die jeweils mittels zumindest einer individuellen Leitung (CC-Link) gemäß einer Punkt-zu-Punkt-Verbindung zur Übertragung von Verkehrsdaten mit einer Schnittstelleneinrichtung (SELIC) in der zumindest einen Signalverarbeitungseinheit (SIPRO) verbunden sind.

3. Basisstation (BTS) nach einem der Ansprüche 2,
**dadurch gekennzeichnet,**
daß zusätzliche individuelle Leitungen (CC-Link) zwischen der Zentraleinheit (CORE) und den trägerbezogenen Hochfrequenzeinheiten (RF-TRX) für eine Übertragung von Taktinformation und/oder Steuerinformationen vorgesehen sind.

4. Basisstation (BTS) nach Anspruch 2 oder 3,
**dadurch gekennzeichnet,**
daß für die Schnittstelleneinrichtung (SELIC) und für die Verteil/Kombiniereinheit (IQMUCO) Speicher vorgesehen sind, so daß die Verkehrsdaten zwischengespeichert werden.

5. Basisstation (BTS) nach einem der vorherigen Ansprüche,
**dadurch gekennzeichnet,**
daß die Verteil/Kombiniereinheit (IQMUCO) derart ausgebildet ist, daß auf eine Trägerfrequenz oder Teilträgerfrequenz bezogene Informationen über die individuelle Verbindung (IQ-Link) übertragen werden.

6. Basisstation (BTS) nach einem der vorherigen Ansprüche,
**dadurch gekennzeichnet,**
daß die Verteil/Kombiniereinheit (IQMUCO) für eine Übertragung von Empfangs- und Sendedaten mit Inphase- und Quadraturkomponente im Basisband ausgebildet ist.

7. Basisstation (BTS) nach einem der vorherigen Ansprüche,
**dadurch gekennzeichnet,**
daß die Signalverarbeitungseinheit (SIPRO) für eine Verarbeitung von standort-, sektor-, träger-, teilnehmer-, dienst- und/oder kanalspezifischen Informationen ausgebildet ist.

8. Basisstation (BTS) nach einem der vorherigen Ansprüche,
**dadurch gekennzeichnet,**
daß jede Signalverarbeitungseinheit (SIPRO) mit jeder Hochfrequenzeinheit (RF-TRX) verbunden ist, so daß mehrere oder alle Antennensignale zur Basisbandverarbeitung in jeder Signalverarbeitungseinheit (SIPRO) verwendet werden können.

9. Basisstation (BTS) nach einem der vorherigen Ansprüche,
**dadurch gekennzeichnet,**
die Verteil/Kombiniereinheit (IQMUCO) derart ausgebildet ist, daß eine Inbandsignalisierung mit Informationen zu einer Referenzleistung und/oder zur automatischen Verstärkungskontrolle in Empfangsrichtung über die individuelle Verbindung (IQ-Link) durchgeführt wird.

10. Basisstation (BTS) nach einem der vorherigen Ansprüche,
**dadurch gekennzeichnet,** daß die trägerbezogenen Hochfrequenzeinheit (RF-TRX) in Sende/Empfangsrichtung für eine Verarbeitung von breitbandigen mit einem CDMA-Teilnehmerseparierungsverfahren gespreizten Signalen ausgebildet ist.

11. Basisstation (BTS) nach einem der vorherigen Ansprüche,
**dadurch gekennzeichnet,**
daß die Verteil/Kombiniereinheit (IQMUCO) als eine zentrale Baugruppe zu Verbindung mehrerer trägerbezogener Hochfrequenzeinheiten (RF-TRX) und mehrerer Signalverarbeitungseinheiten (SIPRO) ausgebildet ist.

12. Basisstation (BTS) nach einem der Ansprüche 1 bis 10,
**dadurch gekennzeichnet,**
daß mehrere jeweils einer trägerbezogenen Hochfrequenzeinheit (RF-TRX) zugeordnete Verteil/Kombiniereinheiten (IQMUCO) vorgesehen sind, die jeweils eine Verbindung zu mehreren Signalverarbeitungseinheiten (SIPRO) herstellen.
